(19) **Europäisches Patentamt / European Patent Office / Office européen des brevets**

(11) **EP 2 295 753 B1**

(12) **EUROPEAN PATENT SPECIFICATION**

(45) Date of publication and mention
of the grant of the patent:
**20.06.2012 Bulletin 2012/25**

(51) Int Cl.:
*F01N 3/20* *(2006.01)*       *F01N 9/00* *(2006.01)*

(21) Application number: **10008484.7**

(22) Date of filing: **13.08.2010**

(54) **Method for urea injection control**

Verfahren zur Harnstoffeinspritzsteuerung

Procédé de contrôle d'injection de l'urée

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **14.08.2009 US 541446**

(43) Date of publication of application:
**16.03.2011 Bulletin 2011/11**

(73) Proprietor: **International Engine Intellectual
Property Company
LLC.
Warrenville, IL 60555 (US)**

(72) Inventors:
• **Strots, Vadim
Forest Park, IL 60130 (US)**
• **Wyatt, Sean C.
Chicago, IL 60647 (US)**

(74) Representative: **Kuhnen & Wacker
Patent- und Rechtsanwaltsbüro
Prinz-Ludwig-Strasse 40A
85354 Freising (DE)**

(56) References cited:
**DE-A1-102008 043 895     US-A1- 2004 098 978**

EP 2 295 753 B1

**Description**

FIELD OF THE INVENTION

The present invention relates generally to SCR systems, and more particularly, to a control method for injecting urea into the SCR system.

BACKGROUND OF THE INVENTION

Typically, urea selective catalytic reduction systems (urea SCR systems) are used to reduce oxides of Nitrogen (NOx) from engines. Urea SCR systems rely on injection of 32.5 % aqueous urea solution into the exhaust line of a vehicle upstream of an SCR catalyst. In the SCR catalyst, the urea is decomposed, and the emission from the catalyst is $N_2$, $H_2O$ and $CO_2$.

At the moment of injection, the urea solution temperature is typically close to ambient, and is preferably less than 60 °C. The SCR reaction requires gaseous ammonia. To produce the gaseous ammonia, the injected urea solution must be heated, preferably to over 150 °C, to evaporate the water and decompose the remaining solid urea into ammonia and isocyanic acid. If the evaporation and the decomposition are not complete, the SCR catalyst performance is seduced due to insufficient availability of reductant. Furthermore, solid deposits of urea can be formed in the exhaust pipe, which can cause complete failure of the SCR system.

The heat required for evaporation and decomposition is provided by the exhaust gas. At low exhaust gas temperatures, the available heat may be insufficient for complete evaporation and decomposition of the urea solution.

Currently, SCR systems are controlled by strategies that impose hard temperature limits. If the exhaust gas temperature becomes less than the set limit, typically 150 to 250 °C, the urea injection stops. If the gas temperature is higher than the set limit, the urea injection rate is determined by the control strategy based on NOx flux in the exhaust gas, performance characteristics of the SCR catalyst, and ammonia storage capacity of the SCR catalyst.

However, setting up a hard temperature limit is not desireable. If the temperature limit is set too low, poor evaporation and deposit formation may result. If the temperature limit is set too high, then the control system does not utilize the entire range of temperatures available for the SCR reaction. Being able to utilize the entire range of temperatures available for the SCR reaction is especially important for transient operation when the temperature is generally low and is frequently less than the pro-set limit. An example of such operation is a stop-and-go or city vehicle driving cycle. Patent application US 2004/0098978 A1 discloses for retrofitting diesel truck engines with a system to reduce NOx emissions. The SCR system of this disclosure, including a controller, a reagent tank, and an injection system, is installed on a vehicle. A NOx detector is temporarily installed as part of the system. The vehicle is then operated to collect engine parameters including fuel injection timing, RPM, load, exhaust heat, exhaust flow rate, and the like, together with measurements of the NOx emissions under various operating conditions. Based on the recorded data at various operating conditions, a reagent injection strategy is developed and installed at the reagent injection controller. During vehicle operation, the injector injects reagent into the exhaust system based on control signals from the reagent injection controller in accordance with the injection strategy in order to reduce NOx emissions at the various operating conditions.

SUMMARY OF THE INVENTION

A urea injection control system for a vehicle having an exhaust line in fluid communication with a SCR catalyst and a urea injector for injecting urea into the exhaust line includes a controller for controlling the flow rate of urea injection at the urea injector. The controller compares an optimum urea flow rate with a flexible urea flow rate determined by a flexible flow rate calculator. The controller selects the minimum value of the optimum urea flow rate and the flexible urea flow rate, and controls the urea injector to inject urea at the minimum value.

BRIEF DESCRIPTION OF THE DRAWINGS

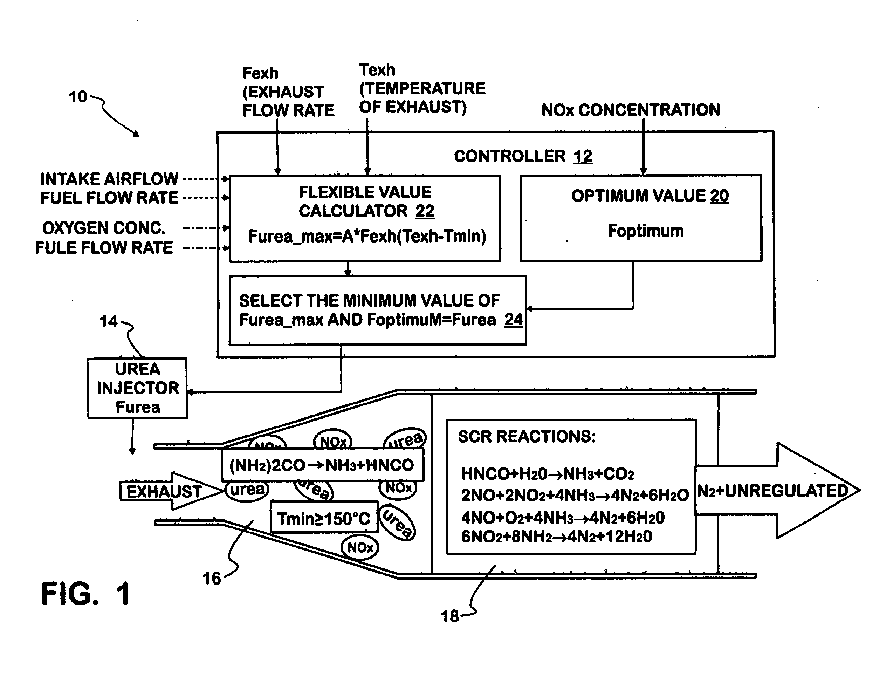

FIG. 1 is a schematic of a control method for injecting urea into an SCR system.

DESCRIPTION OF A PREFERRED EMBODIMENT

Referring to FIG. 1, a flexible limit on the maximum allowable urea solution injection rate ($F_{urea-max}$) limits the urea dosing rate depending on the exhaust flow rate ($F_{exh}$) and temperature ($T_{exh}$), where the limiting rule is determined empirically. The present flexible limit is in contrast to the prior art hard limit where the urea injection is stopped when the exhaust gas temperature does not fall within the temperature limits.

In a urea injection control system 10, a controller 12 controls the flow rate of urea at a urea injector 14, which injects the urea into an exhaust line 16 of a vehicle to decompose upstream of an SCR catalyst 18. The controller 12 has an optimum value 20 and a flexible value calculator 22. The optimum value 20 is determined by the concentration of ammonia required for optimum SCR catalyst performance, and may include factors such as the NOx flux, NOx conversion requirements, SCR kinetics, ammonia storage state, and/or ammonia storage requirements for the particular SCR system. Typically, the optimum value 20 does not take into account the requirements for evaporation of urea solution and decomposition of urea.

The flexible value calculator 22 receives input values of the exhaust gas flow rate ($F_{exh}$) and temperature ($T_{exh}$). In certain applications, such as moving vehicles equipped with internal combustion engines, exhaust flow rate measurements are not available, and can be calculated from the values of intake air flow rate and fuel flow rate, or using other parameters available from the engine control unit. For example, oxygen concentration data can be obtained with one or more oxygen sensors or NOx sensors, where one is typically located upstream of the SCR catalyst 18 and is used for feed-forward SCR controller 12, and where another is located in the tailpipe and is used for feedback into the SCR controller 12. The fuel flow rate data can be used to calculate the exhaust gas flow rate.

Subsequently, the maximum allowable urea flow rate, $F_{urea\_max}$, is calculated using the formula:

$$F_{urea\_max} = A* F_{exh} (T_{exh} - T_{min})$$

where,

$F_{urea\_max} =$      urea solution flow rate
$F_{exh} =$      exhaust flow rate
$T_{exh} =$      exhaust temperature
$T_{min} =$      cut-off temperature
$A =$      coefficient

Coefficient A and $T_{min}$ can be determined or calibrated experimentally for a given SCR system configuration. It is expected that experimental calibration would be required to account for unique parameters of the particular SCR system, such as heat losses, urea spray parameters, geometry of the part of the SCR system where urea solution injection occurs, evaporation, and geometry of the part of the SCR system where decomposition and mixing with the exhaust gas flow take place.

The coefficient A and $T_{min}$ can also be derived from fundamental thermodynamic correlations as follows. Urea is a 32.5 % aqueous solution when injected into the exhaust line of a vehicle upstream of an SCR catalyst 18. The injected urea solution is colder than the temperature of the exhaust gas ($T_{exh}$), therefore energy is transferred from the exhaust gas to the urea solution. As a result of the energy transfer, the temperature of the exhaust gas ($T_{exh}$) is cooled. The transferred energy is used to heat up the urea solution, evaporate water, evaporate urea, and decompose urea: $(NH_2)_2CO \rightarrow NH_3 + HNCO$. It is also assumed that HNCO hydrolysis is slow, and its contribution to the energy balance is negligible.

In the final equilibrium state all components have the same temperature, and the final temperature must ensure evaporation and decomposition of urea. Additionally, the theoretical value that urea decomposition begins at is 132.7 °C, and urea decomposition is at maximum within the range of about 130 to 180°C, and preferably at about 150 °C. Due to heat losses to the pipe walls, a safety margin may be required. Therefore, the recommended urea dosing rate ($F_{urea}$) must result in the final mixture temperature ($T_{min}$) that is always $\geq$ 150 °C, which provides a factor of safety above the theoretical value of 132.7 °C.

The maximum flow of urea solution ($F_{urea\_max}$) can be calculated from the energy balance for any given combination of exhaust flow and exhaust temperature values, using the simplified equation:

$$F_{urea\_max} = 0.388 F_{exh} (T_{exh} - T_{min})$$

where,

$F_{urea\_max} =$      urea solution flow rate, g/hr
$F_{exh} =$      exhaust flow rate, kg/hr
$T_{exh} =$      exhaust temperature, °C

$T_{min}$ = cut-off temperature, °C

It should be appreciated that a different coefficient value will work for different units. Additionally, more precise analysis can result in a somewhat different value, not exactly 0.388, but preferably in the range of about 0.35 to 0.45. It is contemplated that in any case, the coefficient to be used in a vehicle should be adjusted or calibrated empirically, using test data.

After $F_{urea\_max}$ is calculated, the urea flow rate ($F_{urea}$) to the exhaust line 16 is selected at a selector 24 as the minimum of the $F_{urea\_max}$ and the optimum flow rate ($F_{optimum}$). The controller 12 controls the urea injector 14 to inject the urea at the flow rate ($F_{urea}$) as determined by the selector 24. In this way, the injection flow rate ($F_{urea}$) is determined by the control system 10 as optimum for SCR catalyst performance.

The present control system 10 fine-tunes the urea injection rate ($F_{urea}$). Such fine-tuning results in better utilization of the temperature range where only a limited amount of urea can be safely injected, and aids in the prevention of undesirable urea deposits in the exhaust system. The proposed invention can be used as a safeguard added to any known urea injection method, and can be implemented in any industry standard controller.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

**Claims**

1. A urea injection control system (10) for an exhaust line (16) in fluid communication with a SCR catalyst (18) and a urea injector (14) for injecting urea into the exhaust line, the urea injection control system comprising:

   a controller (12) for controlling the flow rate of urea injection at the urea injector,
   wherein the controller compares an optimum urea flow rate (20) determined by the concentration of ammonia required for optimum SCR catalyst performance with a flexible urea flow rate determined by a flexible urea flow rate calculator (22),
   wherein the flexible urea flow rate calculator (22) receives inputs of exhaust flow rate and exhaust temperature,
   wherein the controller selects the minimum value of the optimum urea flow rate and the flexible urea flow rate, and controls the urea injector to inject urea at the minimum value, and
   wherein the flexible urea flow rate calculator (22) determines the flexible urea flow rate with the equation:

$$\text{Furea\_max} = A * \text{Fexh} \, (\text{Texh} - \text{Tmin})$$

   where,

   $F_{urea\_max}$ = flexible urea flow rate, g/hr
   Fexh = exhaust flow rate, kg/hr
   Texh = exhaust temperature, °C
   Tmin = cut-off temperature, °C
   A = coefficient.

2. The urea injection control system of claim 1 wherein the coefficient A is between 0.35 and 0.45.

3. The urea injection control system of claim 1 wherein Tmin is in the range of 130 to 180 °C.

4. The urea injection control system of claim 1 wherein the flexible value calculator receives inputs of at least one of intake airflow, fuel flow rate, oxygen concentration, and fuel flow rate to calculate the exhaust flow rate and the exhaust temperature.

5. The urea injection control system of claim 4 wherein the flexible urea flow rate calculator determines the flexible urea flow rate with the equation:

$$F_{urea\_max} = A* Fexh (Texh - Tmin)$$

where,

$F_{urea\_max}$ = flexible urea flow rate, g/hr
Fexh = exhaust flow rate, kg/hr
Texh = exhaust temperature, °C
Tmin = cut-off temperature, °C
A = coefficient

6. The urea injection control system of claim 5 wherein the coefficient A is between 0.35 and 0.45.

7. The urea injection control system of claim 5 wherein Tmin is in the range of 130 to 180 °C.

8. The urea injection control system of claim 1 wherein the controller further comprises a selector for selecting the minimum value of the optimum urea flow rate and the flexible urea flow rate, and for controlling the urea injector to inject urea at the minimum value.

9. The urea injection control system of claim 1 further comprising a selector (24) at the controller that selects the minimum value of the optimum urea flow rate and the flexible urea flow rate, wherein the urea injector is instructed by the selector to inject urea at the minimum value.

**Patentansprüche**

1. Harnstoffeinspritzungssteuerungssystem (10) für eine Abgasleitung (16), die in fluidischer Kommunikation steht mit einem SCR-Katalysator (18), und für einen Harnstoffinjektor (14) zum Injizieren von Harnstoff in die Abgasleitung, wobei das Harnstoffeinspritzungssteuerungssystem aufweist:

einen Controller (12) zum Steuern der Strömungsrate einer Harnstoffeinspritzung an dem Harnstoffinjektor, wobei der Controller eine optimale Harnstoffströmungsrate (20), die durch die Konzentration von Ammoniak, das für eine optimale SCR-Katalysatorleistung notwendig ist, bestimmt wird, mit einer flexiblen Harnstoffströmungsrate vergleicht, die durch einen Kalkulator (22) für eine flexible Harnstoffströmungsrate bestimmt wird, wobei der Kalkulator (22) für eine flexible Harnstoffströmungsrate Eingaben von einer Abgasströmungsrate und einer Abgastemperatur empfängt,
wobei der Controller den minimalen Wert der optimalen Harnstoffströmungsrate und der flexiblen Harnstoffströmungsrate auswählt und den Harnstoffinjektor so steuert, dass Harnstoff bei dem Minimalwert eingespritzt wird, und
wobei der Kalkulator (22) für eine flexible Harnstoffströmungsrate die flexible Harnstoffströmungsrate anhand der folgenden Gleichung bestimmt:

$$Furea\_max = A*Fexh (Texh - Tmin)$$

wenn Furea_max = flexible Harnstoffströmungsrate, g/h
Fexh = Abgasströmungsrate, kg/h
Texh = Abgastemperatur, °C
Tmin = Abschalttemperatur, °C
A = Koeffizient.

2. Harnstoffeinspritzungssteuerungssystem nach Anspruch 1, wobei der Koeffizient A zwischen 0,35 und 0,45 liegt.

3. Harnstoffeinspritzungssteuerungssystem nach Anspruch 1, wobei Tmin in dem Bereich von 130 bis 180 °C liegt.

4. Harnstoffeinspritzungssteuerungssystem nach Anspruch 1, wobei der Kalkulator tür einen flexiblen Wert Eingaben von zumindest einer Saugluftströmung, einer Kraftstoffströmungsrate, einer Sauerstoffkonzentration und/oder einer Kraftstoffströmungsrate empfängt, um die Abgasströmungsrate und die Abgastemperatur zu berechnen.

5. Harnstoffeinspritzungssteuerungssystem nach Anspruch 4, wobei der Kalkulator für eine flexible Harnstoffströmungsrate die flexible Harnstoffströmungsrate anhand der folgenden Gleichung bestimmt:

$$Furea\_max = A*Fexh\ (TExh - Tmin)$$

wenn Furea_max = flexible Harnstoffströmungsrate, g/h
Fexh = Abgasströmungsrate, kg/h
Texh = Abgastemperatur, °C
Tmin = Abschalttemperatur, °C
A = Koeffizient.

6. Harnstoffeinspritzungssteuerungssystem nach Anspruch 5, wobei der Koeffizient A zwischen 0,35 und 0,45 liegt.

7. Harnstoffeinspritzungssteuerungssystem nach Anspruch 5, wobei Tmin in dem Bereich von 130 bis 180 °C liegt.

8. Harnstoffeinspritzungssteuerungssystem nach Anspruch 1, wobei der Controller ferner einen Selektor zum Auswählen des Minimalwerts der optimalen Harnstoffströmungsrate und der flexiblen Harnstoffströmungsrate und zum Steuern des Harnstoffinjektors zum Einspritzen von Harnstoff bei dem Minmalwert aufweist.

9. Harnstoffeinspritzungssteuerungssystem nach Anspruch 1, ferner aufweisend einen Selektor (24) an dem Controller, der den Minimalwert der optimalen Harnstoffströmungsrate und der flexiblen Harnstoffströmungsrate auswählt, wobei der Harnstoffinjektor durch den Selektor angewiesen wird, Harnstoff bei dem Minimalwert einzuspritzen.


**Revendications**

1. Système (10) de contrôle de l'injection d'urée pour une ligne (16) d'échappement en communication de fluide avec un pot (18) catalytique SCR et avec un injecteur (14) d'urée pour injecter de l'urée dans la ligne d'échappement, le système de réglage de l'injection d'urée comprenant :

   une unité (12) de réglage pour régler le débit d'injection d'urée à l'injecteur d'urée,
   dans lequel le dispositif de réglage compare un débit (20) optimum d'urée, déterminé par la concentration d'ammoniac nécessaire pour des performances optimum du pot catalytique SCR, à un débit flexible d'urée déterminé par un calculateur (22) de débit flexible d'urée,
   dans lequel le calculateur (22) de débit flexible d'urée reçoit des signaux d'entrée de débit d'échappement et de température d'échappement,
   dans lequel le dispositif de réglage sélectionne la valeur minimum du débit optimum d'urée et du débit flexible d'urée et règle l'injecteur d'urée pour qu'il injecte de l'urée à la valeur minimum, et
   dans lequel, le calculateur (22) du débit flexible d'urée détermine le débit flexible d'urée par l'équation :

$$Furea\_max = A*Fexh(Texh - Tmin)$$

   dans laquelle, Furea_max = débit flexible d'urée, g/h
   Fexh = débit d'échappement, kg/h
   Texh = température d'échappement, °C
   Tmin = température d'arrêt, °C
   A = coefficient.

2. Système de réglage d'injection d'urée suivant la revendication 1, dans lequel le coefficient A est compris entre 0.35 et 0.45.

**3.** Système de réglage d'injection d'urée suivant la revendication 1, dans lequel Tmin est de l'ordre de 130 à 180°C.

**4.** Système de réglage d'injection d'urée suivant la revendication 1, dans lequel le calculateur de la valeur flexible reçoit des signaux d'entrée d'au moins l'un d'un courant d'air d'admission, d'un débit de carburant, d'une concentration d'oxygène et d'un débit de carburant pour calculer le débit d'échappement et la température d'échappement.

**5.** Système de réglage d'injection d'urée suivant la revendication 4, dans lequel le calculateur de débit flexible d'urée détermine le débit flexible durée par l'équation :

$$\text{Furea\_max} = A*\text{Fexh}(\text{Texh} - \text{Tmin})$$

dans laquelle, Furea_max = débit flexible d'urée, g/h
Fexh = débit d'échappement, kg/h
Texh = température d'échappement, °C
Tmin = température d'arrêt, °C
A = coefficient.

**6.** Système de réglage d'injection d'urée suivant la revendication 5, dans lequel le coefficient A est compris entre 0.35 et 0.45.

**7.** Système de réglage d'injection d'urée suivant la revendication 5, dans lequel Tmin est de l'ordre de 130 à 180°C.

**8.** Système de réglage d'injection d'urée suivant la revendication 1, dans lequel l'unité de réglage comprenant, en outre, un sélectionneur pour sélectionner la valeur minimum du débit optimum d'urée et du débit flexible d'urée et pour régler l'injecteur d'urée pour qu'il injecte de l'urée à la valeur minimum.

**9.** Système de réglage d'injection d'urée suivant la revendication 1, comprenant, en outre, un sélectionneur (24) dans l'unité de réglage, qui sélectionne la valeur minimum du débit optimum d'urée et du débit flexible d'urée, l'injecteur d'urée recevant instruction par le sélectionneur d'injecter de l'urée à la valeur minimum.

EP 2 295 753 B1

Fexh
(EXHAUST
FLOW RATE

Texh
(TEMPERATURE
OF EXHAUST)

NOx CONCENTRATION

10

CONTROLLER 12

INTAKE AIRFLOW
FUEL FLOW RATE

OXYGEN CONC.
FULE FLOW RATE

FLEXIBLE VALUE
CALCULATOR 22

$Furea\_max=A*Fexh(Texh-Tmin)$

OPTIMUM VALUE 20

Foptimum

SELECT THE MINIMUM VALUE OF
Furea_max AND FoptimuM=Furea 24

14

UREA
INJECTOR
Furea

SCR REACTIONS:

$(NH_2)2CO \rightarrow NH_3+HNCO$

NOx   NOx   urea

EXHAUST   urea   urea   NOx

$Tmin \geq 150°C$   urea

NOx

$HNCO+H_2O \rightarrow NH_3+CO_2$
$2NO+2NO_2+4NH_3 \rightarrow 4N_2+6H_2O$
$4NO+O_2+4NH_3 \rightarrow 4N_2+6H_2O$
$6NO_2+8NH_2 \rightarrow 4N_2+12H_2O$

N₂+UNREGULATED

16

18

# FIG. 1

**EP 2 295 753 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040098978 A1